(19) Europäisches Patentamt

European Patent Office

Office européen des brevets

(11) EP 0 765 251 B1

## (12) FASCICULE DE BREVET EUROPEEN

(45) Date de publication et mention de la délivrance du brevet:
**09.09.1998 Bulletin 1998/37**

(21) Numéro de dépôt: 95923377.6

(22) Date de dépôt: 13.06.1995

(51) Int. Cl.$^6$: **B60D 1/30**, B62D 13/02

(86) Numéro de dépôt international:
**PCT/FR95/00774**

(87) Numéro de publication internationale:
**WO 95/34435 (21.12.1995 Gazette 1995/54)**

(54) **LIAISON A CORRECTEUR ANGULAIRE ENTRE DEUX MODULES ROUTIERS RELIES ENTRE EUX PAR UN MODULE INTERMEIDIARE AUTOPORTE**

KUPPLUNGSVORRICHTUNG ZUR KONTROLLE DES WINKELVERSETZES ZWISCHEN ZWEI WEGTRANSPORTEINHEITEN DIE MITEINANDER VERBUNDEN SIND DURCH EINE SELBSTTRAGENDE ZWISCHENEINHEIT

COUPLING FOR CONTROLLING THE ANGULAR OFFSET BETWEEN TWO ROAD TRANSPORT UNITS CONNECTED TO ONE ANOTHER BY A SELF-SUPPORTING INTERMEDIATE UNIT

(84) Etats contractants désignés:
**AT BE CH DE ES GB GR IT LI NL**

(30) Priorité: **16.06.1994 FR 9407555**

(43) Date de publication de la demande:
**02.04.1997 Bulletin 1997/14**

(73) Titulaire: **LOHR INDUSTRIE**
**67980 Hangenbieten (FR)**

(72) Inventeur: **ANDRE, Jean-Luc**
**F-67210 Obernai (FR)**

(74) Mandataire: **Metz, Paul**
**Cabinet METZ PATNI,**
**63, rue de la Ganzau**
**67100 Strasbourg (FR)**

(56) Documents cités:
**EP-A- 0 031 596**      **WO-A-94/23985**
**FR-A- 2 549 436**

Printed by Xerox (UK) Business Services
2.16.3/3.4

**Description**

La présente invention se rapporte à une liaison à correcteur angulaire entre deux modules routiers adjacents reliés entre eux à pivotement par un module intermédiaire autoporteur constituant un des sous-ensembles d'un véhicule routier articulé et plus particulièrement à une liaison selon les caractéristiques du préambule de la revendication indépendante 1.

L'idéal du comportement en virage des véhicules routiers articulés formés de plusieurs modules ou voitures en série consiste à posséder des articulations intermodules dont la loi de déviation angulaire entre les modules est telle que les essieux soient en permanence dirigés vers le centre du virage.

On désigne cette caractéristique par véhicules à essieux rayonnants.

Cette caractéristique présente un intérêt pour les transports urbains car elle permet de garantir une emprise dynamique au sol minimale dans les courbes.

Cette caractéristique se montre cependant insuffisante pour les véhicules articulés à plusieurs modules en série avec interposition d'un module intermédiaire, qui présentent un comportement en lacet plus ou moins important en sortie de courbe avec un déport latéral plus ou moins prononcé.

Il en est ainsi des véhicules routiers articulés dont chaque module est séparé du module adjacent par un module intermédiaire porté par un essieu et relié à chacun des deux modules adjacents par une articulation de pivotement avec comme contrainte cinématique supplémentaire une liaison oblique rigide qui relie les deux modules successifs directement entre eux par une liaison rotulée à chacune de ses extrémités sur chacun des modules.

A titre d'exemple, on connaît une telle réalisation par la publication WO 94/23985 du présent déposant, la société LOHR Industrie. Cette invention met en oeuvre une bielle oblique rigide et une articulation supérieure à déplacement limité.

Malgré la présence de la liaison oblique rigide, le comportement de ce type de véhicules routiers articulés est assorti de plusieurs inconvénients suffisamment importants pour avoir donné lieu à la présente invention.

En premier lieu, on remarque sur de tels ensembles routiers articulés, en ligne droite et à partir d'une certaine vitesse, des oscillations de lacet préjudiciables à la sécurité des passagers.

En second lieu, le comportement purement cinématique de ces liaisons articulées intermodules provoque des déviations en lacets à la sortie des courbes et en particulier un balayage extérieur au virage qui peut, dans certaines conditions, dépasser la limite admise.

On peut remédier au premier inconvénient en condamnant le mouvement de pivotement d'une des articulations de pivotement, par exemple l'articulation du module avant, pour se trouver en configuration de camion + remorque. On sait par la pratique que cette association se révèle stable allant jusqu'à la vitesse maximale exploitable autorisée.

Cette condamnation conduit mécaniquement à une emprise au sol plus pénalisante dans les virages importants.

Or, comme indiqué précédemment, la circulation urbaine exige actuellement pour les transports de voyageurs une emprise minimale au sol dans les courbes.

Ces exigences cumulées ne permettent pas d'envisager l'application de la seule technique précitée de condamnation d'une articulation dans les courbes sur un véhicule articulé de transport urbain de voyageurs car elle n'offrirait pas la garantie d'une emprise minimale sur tout le parcours.

On connaît également par FR n° 2 549 436 au nom de RENAULT VEHICULES INDUSTRIELS, une liaison articulée entre deux voitures par un module intermédiaire autoporteur.

Ce module intermédiaire est relié à chacun des modules adjacents par un ensemble d'articulations à trois degrés de liberté dont au moins deux sont placées en position médiane sur chacune des faces transversales d'extrémité en regard des deux voitures. Une articulation à déplacement limité est associée à chacun des groupes d'articulation à trois degrés de liberté de façon à constituer une liaison articulée double ou multiple entre le module intermédiaire et une des deux voitures adjacentes. Pour permettre la variation de longueur des liaisons articulées, celles-ci sont réalisées sous la forme de vérins ou de bielles télescopiques.

Cette réalisation met en oeuvre des dispositions constructives complexes et onéreuses par l'emploi de vérins complémentaires pour contrôler la trajectoire lors d'un changement de direction.

La présente invention a pour but de supprimer simultanément les deux inconvénients précités d'instabilité en ligne droite à partir d'une certaine vitesse et de déport latéral en sortie de courbe de manière à présenter un comportement routier idéal conforme aux exigences et aux réglementations du transport en commun en milieu urbain.

La présente invention constitue un perfectionnement général aux liaisons articulées composites entre deux des modules successifs d'un même véhicule routier articulé reliés entre eux par un module intermédiaire autoporté moteur ou tracté.

Elle évite l'emploi de vérins ou de bielles télescopiques. Elle ne met en oeuvre que des moyens mécaniques qui permettent d'assurer une grande fiabilité.

Le perfectionnement général s'appliquant à ce type de liaisons articulées entre deux modules successifs avant et suivant séparés par un module intermédiaire auquel ils sont reliés chacun par une articulation de pivotement se caractérise en ce que la liaison articulée à travers le module intermédiaire et les articulations de pivotement est complétée par une liaison de correction angulaire, à zone peu sensible au centre de part et d'autre de la direction de ligne droite, pour commander l'orientation du module avant à partir de celle du module suivant.

D'autres caractéristiques techniques et avantages de l'invention apparaîtront dans la description qui suit, donnée à titre d'exemple et accompagnée des dessins dans lesquels :

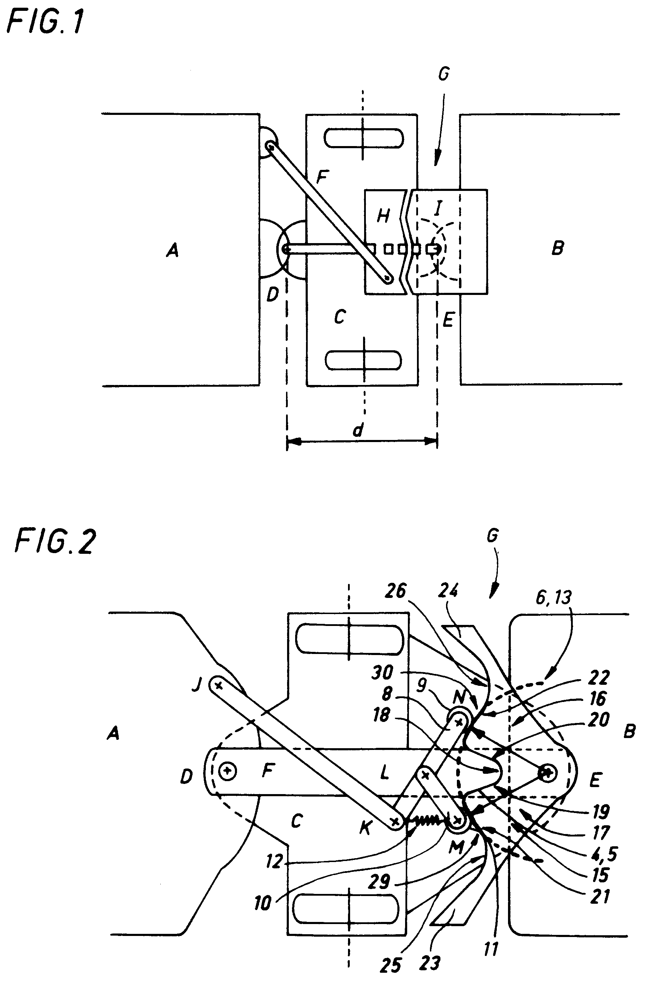

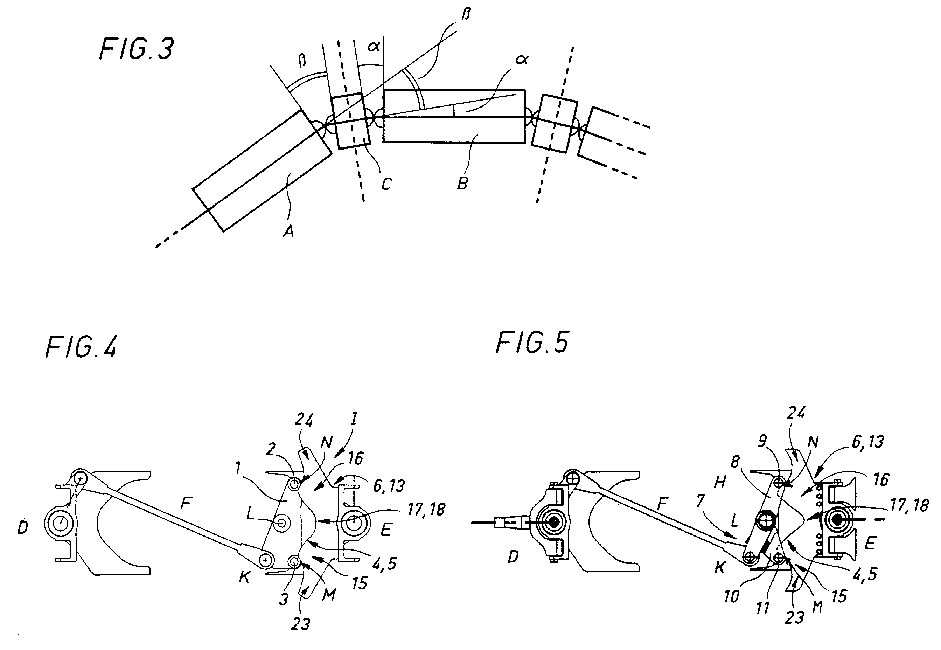

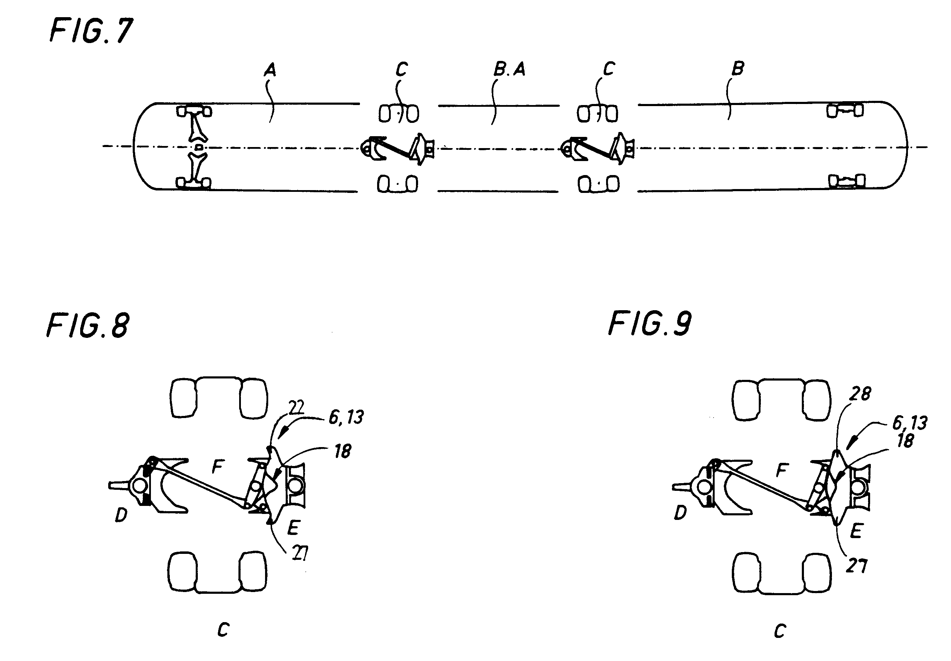

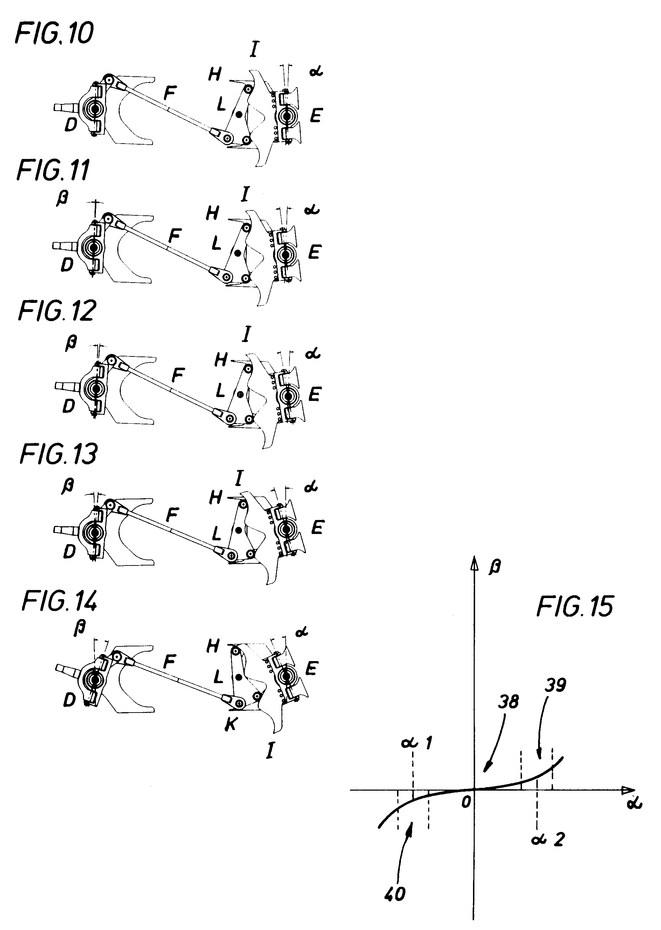

.   la figure 1 est une vue schématique générale en plan par blocs fonctionnels de la liaison articulée entre deux modules successifs ;
.   la figure 2 est une vue schématique en plan montrant une variante à came et l'allure générale de son profil ;
.   la figure 3 est le schéma de définition des angles $\alpha$ et $\beta$ ;
.   les figures 4, 5 et 6 sont des vues en plan de liaisons articulées correspondant aux formes réelles de came ou à fente et doigt suiveur ;
.   les figures 7, 8 et 9 montrent, vus en plan, une rame en ligne droite formée de trois modules et le détail de chacune des liaisons articulées intermodules ;
.   les figures 10 à 14 représentent sous la forme d'une succession de vues schématiques une séquence montrant le travail du mécanisme à came et les variations des angles $\alpha$ et $\beta$ ;
.   la figure 15 est un exemple d'allure de courbe illustrant le type de relation de dépendance entre les grandeurs des angles $\alpha$ et $\beta$.

La présente invention s'applique aux véhicules routiers articulés formés d'une pluralité de modules reliés entre eux par une articulation composite intermodules. Cette articulation composite intermodules se compose principalement, entre un module avant A et un module suivant B, d'un module intermédiaire C autoporté articulé à l'un et à l'autre des modules A et B par une articulation de pivotement respectivement avant D et suivante E autour d'un axe vertical.

L'invention s'applique en particulier à une articulation composite intermodules présentant en plus une liaison oblique rigide articulée par chacune de ses extrémités sur l'un et sur l'autre des modules A et B constituant un sous-ensemble d'un véhicule routier articulé.

La liaison de correction angulaire selon l'invention entre les modules A et B articulés entre eux par le module intermédiaire C procède de l'idée générale inventive qui consiste à prévoir, entre le module avant A et le module suivant B, une liaison de correction angulaire imposant un angle $\beta$ entre le module avant A et le module intermédiaire C (figure 3) selon une loi appropriée de déviation angulaire fonction de l'angle $\alpha$ entre le module intermédiaire C et le module suivant B (figure 3). Cette loi présente une zone centrale à pente faible ou nulle pour les valeurs $\alpha$ inférieures à une valeur prédéterminée, zone centrale suivie d'une fonction de dépendance entre $\alpha$ et $\beta$ telle que l'effet de lacet des modules soit notablement réduit.

Tout se passe comme si la liaison articulée composite restait du type camion + remorque en ligne droite et pour les faibles angles de virage, c'est-à-dire comme si l'articulation avant D était condamnée ou bloquée, imposant une liaison rigide entre le module avant et le module intermédiaire jusqu'à une valeur angulaire limite à partir de laquelle l'angle $\beta$ devient une fonction croissante de l'angle de virage.

Cette sortie de la zone peu sensible de variation angulaire correspond à un changement dans le comportement routier entre un mode dit de camion + remorque et un autre mode dit à déviation commandée.

Par construction, la ligne interarticulations D-E est un segment de droite de longueur constante "d".

Comme déjà indiqué ci-dessus, ce type de liaison nécessite pour la sortie des courbes une correction angulaire adaptée neutralisant le comportement en lacet lié à la particularité de la liaison articulée intermodules existant sur les véhicules articulés composites du type visé par l'invention.

De façon générale, la chaîne correctrice selon l'invention se compose d'une liaison rigide F, par exemple oblique, entre le module A et un bloc représentant un dispositif correcteur G modifiant l'orientation angulaire du module A par rapport au module C en fonction de l'orientation du module B par rapport au module C.

Ce dispositif G est de type purement mécanique, c'est-à-dire à commande mécanique, mais peut tout aussi bien être piloté par un calculateur à partir d'un capteur ou tout autre système particulier de commande.

Il a pour fonction de corriger la position d'orientation que prendraient les modules dans les virages, et notamment à la sortie des courbes, si l'articulation composite intermodules ne comportait que les seuls moyens connus préalablement à la présente invention.

La représentation schématique générale de la figure 1 a pour but de souligner le caractère général de l'invention.

De façon générale, le dispositif G est un correcteur angulaire qui modifie le comportement et plus particulièrement la présentation angulaire du module A par rapport au module C, soit l'angle $\beta$, en fonction de la position directionnelle du module B par rapport au module C, soit l'angle $\alpha$, dans une courbe et à la sortie de celle-ci. La commande directionnelle est transmise par la liaison oblique F existant entre le module avant A et le dispositif G ou un capteur angulaire ou tout autre moyen destiné à fournir une information sur la valeur de l'angle $\alpha$.

Cette information provient de la liaison oblique rigide F reliant le module avant A au dispositif G qui, selon une réalisation particulière, affecte la forme d'une bielle montée articulée par ses extrémités sur l'un et sur l'autre de ces derniers.

Le dispositif correcteur G se compose de deux sous ensembles: un déviateur H et un actionneur I coopérant entre eux.

Le déviateur H est relié de façon articulée au module avant A par la liaison F qui assure la transmission mécanique des commandes d'orientation angulaire à ce module. Il est mobile et coopère avec l'actionneur I.

L'actionneur I est solidaire du module suivant B. Il impose la loi de correction angulaire. Il agit dans la liaison articulée correctrice d'angle comme une commande à pondération angulaire en vue de modifier l'angle β et permettre de neutraliser au mieux la tendance au déport en lacet à la sortie des virages par une loi appropriée de correspondance angulaire à zone centrale peu sensible pour les valeurs faibles de l'angle du virage à droite comme à gauche.

La liaison composite articulée intermodules présente deux modes de fonctionnement selon la valeur de l'angle du mouvement de virage :

.   le mode camion + remorque pour les petits angles de déviation du module suivant B par rapport au module C, soit α, mode dans lequel les mouvements de pivotement du module intermédiaire C par rapport au module avant A correspondant à l'angle β sont à peu près neutralisés pour des valeurs angulaires faibles de l'angle α alors que les mouvements du module suivant B par rapport au module intermédiaire C sont libres ;

.   le mode commandé pour les angles de déviation α plus importants du module suivant B par rapport au module intermédiaire C, mode dans lequel les mouvements de pivotement du module intermédiaire C par rapport au module avant A sont fonction de l'angle α et commandés par celui-ci.

Le passage entre les deux modes s'effectue selon une zone de transition en extrémité de la zone centrale comme on peut le voir sur la figure 15.

On examinera maintenant l'invention par ses moyens particuliers à l'aide de la description détaillée de plusieurs variantes mécaniques.

On se référera tout d'abord aux figures 2, 4 et 5.

La chaîne correctrice se compose de façon générale, d'abord de la liaison oblique articulée F de transmission de commande d'orientation, montée articulée entre un point d'articulation avant J solidaire du corps du module avant A et un point d'articulation K solidaire du déviateur H pivotant autour d'un axe vertical L porté par le module intermédiaire C, axe sécant, pour des raisons de symétrie, avec la ligne reliant les articulations D et E.

Le déviateur H est un ensemble basculant articulé lié à la liaison oblique F en contact avec l'actionneur I par au moins un élément mobile qui suit une piste de guidage.

Il peut s'agir, tout d'abord, d'une pièce pivotante 1 autour de l'axe L, conformée en triangle dont la base est équipée de moyens de roulement, par exemple des galets 2 et 3, se déplaçant le long d'un bord 4 de commande de l'actionneur I et en contact d'appui avec celui-ci par les points M et N sur un profil 5 d'un organe de commande 6 solidaire du châssis du module B agissant sur les moyens de roulement (figure 5).

Le déviateur H peut également être constitué par un ensemble articulé 7 formé d'abord d'une simple bielle pivotante 8 autour de l'axe de basculement L dont une des extrémités est reliée de façon articulée à l'extrémité K de la bielle oblique F de transmission et dont l'autre extrémité porte un moyen de roulement, par exemple un galet 9. Une bielle auxiliaire 10 montée à pivotement autour de l'axe L assure le complément de liaison entre l'axe de basculement L et l'autre moyen de roulement réalisé également sous la forme d'un galet 11. Les galets 9 et 11 sont également en contact d'appui en M et N avec le bord du profil 5 de l'organe de commande 6.

Pour éviter à cette liaison un caractère hyperstatique, les bielles sont reliées entre elles par un ressort 12 comme représenté sur la figure 2 assurant un contact permanent des galets.

L'actionneur I est réalisé dans les variantes représentées sous la forme d'une came 13 ou d'une glissière 14 dont les corps sont solidaires du module suivant B (figure 2, et 4, 5, 6).

L'allure générale identique de la forme technique du profil 5 de came est variable selon sa position sur la rame routière articulée, lorsque cette rame comporte plusieurs modules intermédiaires.

Pour la commande d'orientation de la version à deux galets, la came présente un profil général 5 sensiblement symétrique formé de deux demi-parties 15 et 16. La partie centrale 17 de ce profil comporte un creux central 18 plus ou moins prononcé de forme générale en "V" plus ou moins évasé. Chaque demi-partie 15 et 16 présente successivement vers chaque extrémité de la came 13 une pente montante 19 et 20, une portion en arrondi circulaire 21 et 22, suivie par une zone de fuite 23 et 24 de tracé adapté, par exemple une cuvette 25 et 26, de concavité tournée dans le même sens que celle du creux central 18 ou une pente inclinée 27 et 28 comme représenté sur les figures 8 et 9.

Chacune des portions en arrondi circulaire 21 et 22 gauche et droite se développe selon un arc de cercle 29 et 30. Ces arcs de cercle sont identiques et ont pour centre le centre de l'articulation E. Ces portions sont représentées en trait fort sur la figure 2 et matérialisées à chaque fois par une flèche.

La forme de ce profil de came peut varier en fonction de la loi particulière à obtenir.

Elle variera d'une liaison intermodule à l'autre sur une même rame routière articulée en gardant une allure générale identique. En effet, en raison des interactions respectives entre les modules, et pour éviter les mouvements de lacet, les lois de variation entre les angles et par conséquent les profils des cames ou leurs équivalents mécaniques seront différents les uns par rapport aux autres comme on peut le voir sur les figures 7, 8 et 9, où sont représentées les modifications de forme du profil de la came.

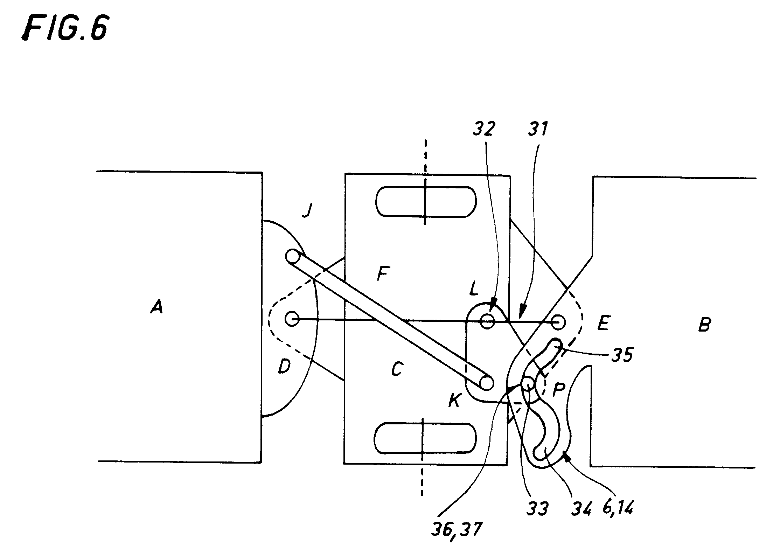

La variante représentée sur la figure 6 constitue un équivalent fonctionnel des mécanismes à came.

Selon cette variante, le déviateur H est une platine pivotante 31 autour de l'axe vertical L sécant en 32 avec la ligne D-E sous l'effet de l'actionneur I.

Cette platine comporte à son extrémité libre un élément transversal perpendiculaire à son plan, par exemple un doigt suiveur 33, un bout d'axe ou tout autre moyen équivalent apte à suivre un guidage. Dans ce cas, l'actionneur I est un moyen de guidage, par exemple une glissière, sous la forme d'une fente 34 le long de laquelle se déplace le doigt suiveur 33. Cette fente 34 est réalisée dans une plaque horizontale solidaire du châssis du module suivant B. La forme de tracé de cette fente correspond de façon générale à celle du profil 5 de la came sur une de ses demi-parties 15 ou 16 sensiblement symétriques, par exemple gauche.

On y retrouve une des pentes 35 du creux central 18, et une portion circulaire 36 en arc de cercle 37 de même centre que celle existant sur la came.

En se référant à la figure 3, on définit l'angle $\beta$ comme l'angle existant entre la liaison rigide interarticulations de pivotement D-E et l'axe du module avant A. On définit l'angle $\alpha$ comme l'angle existant entre la liaison rigide interarticulations D-E de pivotement et l'axe du module suivant B.

Les angles $\beta$ et $\alpha$ correspondent aussi aux inclinaisons respectivement entre les modules avant A et intermédiaire C et entre ce dernier et le module suivant B. Ils sont représentés aussi de cette façon sur la figure 3.

Selon l'invention, l'angle $\beta$ est une fonction de l'angle $\alpha$ telle que :

$$\beta = 0 \text{ ou une valeur faible progressive si } \alpha1 \leq \alpha \leq \alpha2$$

$$\beta = f(\alpha) \text{ si } \alpha \geq \alpha2 \text{ ou } \alpha \leq \alpha1$$

et de préférence $\alpha1 = \alpha2$ en valeur absolue.

Ainsi la fonction présente une plage ou zone centrale 38 de valeur nulle ou faible et à faible pente à l'intérieur de ces deux valeurs $\alpha1$ et $\alpha2$ (figure 15), et à chacune de ses extrémités une zone transitoire 39 et 40.

L'association mécanique formée de la bielle oblique F, du déviateur H et de l'actionneur I permet de mettre en oeuvre cette loi dont les valeurs limites de dépassement $\alpha1$ et $\alpha2$ et la fonction angulaire dépendent du profil de came.

Pour ce faire, la came présente le profil général sensiblement symétrique décrit ci-dessus formé de deux demi-parties sensiblement symétriques. Un effet identique est obtenu en utilisant le profil d'une seule demi-partie (figure 6).

On comprend aisément sur cette figure que les premiers mouvements de poussée ou de traction de la bielle F, c'est-à-dire ceux correspondant aux premiers degrés de l'angle $\alpha$, ne modifieront pas ou très peu l'angle $\beta$. Dans ce cas, les mouvements de déviation angulaire sont analogues à ceux d'une liaison du type camion + remorque dans laquelle les modules A et C constituent le camion et le module B la remorque.

En effet, sur toute la portion du profil de came en arrondi circulaire selon un arc de cercle de centre correspondant au centre de pivotement de l'articulation E visualisé partiellement en traits discontinus, le pivotement se traduira par le roulement des galets en M et N sur une portion de cercle dont le centre correspond au centre du pivotement du module suivant B, c'est-à-dire celui de l'articulation E. Pour une inclinaison plus forte, le couple des galets dévie davantage et atteint puis décrit pour l'un, les parties extrêmes du profil de came et pour l'autre, la pente du creux central, réalisant ainsi une modification angulaire de l'angle $\alpha$ selon la loi souhaitée (figures 10 à 14).

On retrouve dans la variante représentée sur la figure 6 cette portion circulaire du tracé de la fente correspondant aux angles $\alpha$ de faible valeur du mode camion + remorque.

Les faibles mouvements des galets du déviateur sur ces portions circulaires de piste n'ont aucun rôle actif sur la modification d'orientation du module avant A par rapport au module intermédiaire C. La commande est ainsi neutralisée sur une faible amplitude angulaire liée directement à la longueur des portions en arc de cercle du profil de la came. Tout se passe comme si l'on avait condamné l'articulation de pivotement D.

Si l'angle $\alpha$ augmente, le mécanisme à came conduit à un changement de mode. Les galets dépassent chacun la zone d'arrondi circulaire pour rouler sur une portion de piste de travail de profil adapté qui modifie l'angle $\beta$, rendant ainsi $\alpha$ dépendant de $\beta$ selon une loi appropriée permettant de limiter le déport latéral de lacet à la sortie des courbes.

Selon une variante élaborée, la bielle oblique peut servir à un mode de fonctionnement supplémentaire hors du champ de la présente invention. Dans ce cas, il peut s'agir d'une bielle à deux modes de fonctionnement, d'une part celui dans lequel elle reste de longueur fixe et dans lequel le dispositif correcteur de l'invention est en fonction, et d'autre part celui de longueur variable dans lequel la rame est guidée par d'autres moyens et où le correcteur angulaire est inopérant. On passe de l'un à l'autre des modes directionnels par une commande permettant de laisser libre ou rigide ladite bielle.

**Revendications**

1. Liaison composite articulée à correcteur angulaire entre deux modules routiers, l'un avant A et l'autre suivant B, séparés par un module intermédiaire C porté par un essieu, liaison dans laquelle les modules A et B sont articulés par une liaison simple articulée formée de deux articulations de pivotement D et E reliant respectivement les modules A et B entre eux à travers le module intermédiaire C, liaison dans laquelle le module avant A et le module intermédiaire C forment entre eux en virage un angle β et dans laquelle le module intermédiaire C et le module suivant B forment entre eux en virage un angle α caractérisée en ce que la liaison simple articulée est complétée par une liaison de correction angulaire dont la loi de correction présente une zone peu sensible (38) au centre de part et d'autre de la direction de ligne droite, pour commander l'orientation du module avant A à partir de celle du module suivant B.

2. Liaison composite articulée selon la revendication 1, caractérisée en ce que la loi de correction angulaire impose un angle β fonction de l'angle α.

3. Liaison composite articulée selon la revendication 1 ou 2, caractérisée en ce que la liaison de correction angulaire s'appuie sur le module intermédiaire C.

4. Liaison composite articulée selon la revendication 1, 2 ou 3, caractérisée en ce que la zone peu sensible (38) au centre est une zone à pente nulle.

5. Liaison composite articulée selon l'une quelconque des revendications précédentes, caractérisée en ce que la zone sensible (38) au centre est délimitée en extrémité par des zones de transition (39) et (40).

6. Liaison composite articulée selon l'une quelconque des revendications précédentes, caractérisée en ce que la liaison de correction angulaire est constituée d'une bielle oblique F, d'un déviateur H monté sur l'un des modules et commandé par un actionneur I monté sur l'autre module routier.

7. Liaison composite articulée selon la revendication 6, caractérisée en ce que l'actionneur I est solidaire du module suivant B.

8. Liaison composite articulée selon l'une quelconque des revendications précédentes 6 ou 7, caractérisée en ce que le déviateur H est un ensemble basculant articulé à pivotement autour d'un axe de pivotement L coopérant avec un moyen de commande de l'actionneur I.

9. Liaison composite articulée selon la revendication précédente, caractérisée en ce que l'axe de pivotement L est placé sur le module intermédiaire C et coupe la ligne interarticulations D-E.

10. Liaison composite articulée selon la revendication 8, caractérisée en ce que le moyen de transmission du déviateur H est une bielle oblique de commande F montée articulée entre le module A et l'ensemble articulé pivotant (7) du déviateur H.

11. Liaison composite articulée selon la revendication 8, caractérisée en ce que l'actionneur I est une came (13) et le dispositif de commande le profil (5) de la came (13).

12. Liaison composite articulée selon la revendication 8, caractérisée en ce que l'ensemble articulé pivotant (7) est triangulaire.

13. Liaison composite articulée selon la revendication précédente, caractérisée en ce que l'ensemble articulé pivotant (7) triangulaire est une pièce triangulaire pivotante (1).

14. Liaison composite articulée selon la revendication précédente, caractérisée en ce qu'une partie de la pièce triangulaire (1) se déplace le long du profil de came (5) par des moyens de roulement (2,3).

15. Liaison composite articulée selon la revendication précédente, caractérisée en ce que les moyens de roulement (2,3) équipent les angles de la base de la pièce basculante, le sommet étant le point d'articulation K avec une des extrémités de la bielle oblique F.

16. Liaison composite articulée selon la revendication 11, caractérisée en ce que le profil (5) de la came (13) présente deux demi-parties (15,16) sensiblement symétriques séparées par un creux central (18) de forme générale en V, chaque demi-partie (15,16) présentant successivement, du creux central (18) vers l'extrémité, une pente montante (19,20) et une portion en arrondi circulaire (21,22).

17. Liaison composite articulée selon la revendication précédente, caractérisée en ce que la portion formant l'arrondi circulaire (21,22) présente le même centre que celui de l'articulation de pivotement E adjacente.

18. Liaison composite articulée selon l'une quelconque des revendications précédentes de 14 à 17, caractérisée en ce que le profil (5) de la came (13) varie d'une liaison intermodules à l'autre sur un même véhicule articulé formé de plusieurs modules en série.

19. Liaison composite articulée selon l'une quelconque des revendications précédentes de 6 à 18, caractérisée en ce que l'extrémité de la bielle oblique F articulée en J sur un des modules est articulée sur la partie du corps de l'articulation de pivotement D ou E solidaire dudit module.

20. Liaison composite articulée selon l'une quelconque des revendications précédentes, caractérisée en ce que le déviateur H est formé d'une bielle pivotante (8) articulée autour de l'axe de pivotement L et d'une bielle annexe (10) montée également à pivotement autour de l'axe L.

21. Liaison composite articulée selon la revendication précédente, caractérisée en ce que l'une des extrémités de la bielle pivotante (8) est équipée d'un moyen de roulement (9) alors que l'autre extrémité est reliée à l'extrémité articulée K de la bielle oblique de transmission F et en ce que l'extrémité libre de la bielle annexe (10) est équipée d'un moyen de roulement (11), les moyens de roulement (9) et (11) étant en contact d'appui en M et N avec le bord du profil 5 de l'organe de commande.

22. Liaison composite articulée selon l'une des revendications 20 ou 21, caractérisée en ce que les bielles pivotante (8) et annexe (10) sont maintenues en rappel élastique de fermeture par un ressort (12).

23. Liaison composite articulée selon les revendications de 1 à 10, caractérisée en ce que le déviateur H est une platine pivotante (31) présentant un élément suiveur le long d'un guide conformé dans l'actionneur I.

24. Liaison composite articulée selon la revendication précédente, caractérisée en ce que le guide est une fente (34) et l'élément suiveur un doigt (33) porté par le déviateur H.

25. Liaison composite articulée selon la revendication précédente, caractérisée en ce que le tracé du guide est l'une des demi-parties (15, 16) sensiblement symétriques du profil (5) de came (13).

26. Liaison composite articulée selon l'une quelconque des revendications précédentes, caractérisée en ce que la bielle oblique F est une bielle télescopique dont le blocage en longueur est commandé pour activer la liaison de correction angulaire.

**Claims**

1. Articulated composite coupling for correcting the angular offset between two road transport units, front unit A and follower unit B, separated by an intermediate unit C supported by an axle, in which coupling the units A and B are articulated by the agency of an articulated single coupling formed by two swivelling joints D and E which respectively connect units A and B to one another across the intermediate unit C, in which coupling the front unit A and the intermediate unit C between them enclose along curves an angle $\beta$ and in which the intermediate unit C and the follower unit B between them enclose along curves an angle $\alpha$, characterised in that the articulated single coupling is complemented by an angular-offset correcting coupling the law of correction of which features a low-sensitivity zone (38) at the centre to either side of the straight line direction, in order to control the orientation of the front unit A from that of the follower unit B.

2. Articulated composite coupling according to claim 1, characterised in that the law of angular offset correction stipulates an angle $\beta$ which is a function of angle $\alpha$.

3. Articulated composite coupling according to claim 1 or 2, characterised in that the angular-offset correcting coupling rests on the intermediate unit C.

4. Articulated composite coupling according to claim 1, 2 or 3, characterised in that the low-sensitivity zone (38) at the centre is a zero-gradient zone.

5. Articulated composite coupling according to any one of the preceding claims, characterised in that the sensitivity zone (38) at the centre is delimited at the extremity by transitional zones (39) and (40).

6. Articulated composite coupling according to any one of the preceding claims, characterised in that the angular-offset correcting coupling is constituted by an oblique connecting rod F, a diverter H mounted on one of the units and controlled by an actuator I mounted on the other road unit.

7. Articulated composite coupling according to claim 6, characterised in that the actuator I is rigidly joined to the follower unit B.

8. Articulated composite coupling according to either of the preceding claims 6 or 7, characterised in that the diverter H is an articulated rocker-type assembly adapted to swivel about a swivel axis L which cooperates with a control means for the actuator I.

9. Articulated composite coupling according to the preceding claim, characterised in that the swivel axis L is positioned on the intermediate unit C and intersects the line D-E which runs between the joints.

10. Articulated composite coupling according to claim 8, characterised in that the transmission means for the diverter H is an oblique control rod F which is mounted for articulation between the unit A and the swivelling articulated assembly (7) of the diverter H.

11. Articulated composite coupling according to claim 8, characterised in that the actuator I is a cam (13) and the control device the profile (5) of the cam (13).

12. Articulated composite coupling according to claim 8, characterised in that the swivelling articulated assembly (7) is triangular.

13. Articulated composite coupling according to the preceding claim, characterised in that the triangular swivelling articulated assembly (7) is a swivelling triangular component (1).

14. Articulated composite coupling according to the preceding claim, characterised in that part of the triangular component (1) moves along the cam profile (5) via bearing means (2, 3).

15. Articulated composite coupling according to the preceding claim, characterised in that the bearing means (2, 3) provide the angles of the base of the rocker component, the apex being the point of articulation K with one of the extremities of the oblique connecting rod F.

16. Articulated composite coupling according to claim 11, characterised in that the profile (5) of the cam (3) features two substantially symmetrical half-portions (15, 16) separated by a generally V-shaped central recess (18), each half-portion (15, 16) featuring in succession, from the central recess (18) towards the extremity, an ascending gradient (19, 20) and a circularly rounded portion (21, 22).

17. Articulated composite coupling according to the preceding claim, characterised in that the portion having the circular rounded appearance (21, 22) features the same centre as that of the adjacent swivelling joint E.

18. Articulated composite coupling according to any one of preceding claims 14 to 17, characterised in that the profile (5) of the cam (13) varies from one inter-unit coupling to the other along the same articulated vehicle constituted by a plurality of units in series.

19. Articulated composite coupling according to any one of preceding claims 6 to 18, characterised in that the extremity of the oblique connecting rod F articulated at J on one of the units is articulated on the portion of the body of the swivelling joint D or E rigidly joined to said unit.

**20.** Articulated composite coupling according to any one of the preceding claims, characterised in that the diverter H is constituted by a swivelling connecting rod (8) articulated about the swivel axis L and by a supplemental connecting rod (10) likewise mounted so as to swivel about the axis L.

**21.** Articulated composite coupling according to the preceding claim, characterised in that one of the extremities of the swivelling connecting rod (8) is fitted with a bearing means (9) whereas the other extremity is connected to the articulated extremity K of the oblique transmission rod F and that the free extremity of the supplemental connecting rod (10) is fitted with a bearing means (11), the bearing means (9) and (11) being in supporting contact at M and N with the edge of the profile (5) of the control element.

**22.** Articulated composite coupling according to either of claims 20 or 21, characterised in that the swivelling rod (8) and the supplemental rod (10) are maintained in an elastic return closure movement by a spring (12).

**23.** Articulated composite coupling according to claims 1 to 10, characterised in that the diverter H is a swivelling plate (31) which features a follower element along a guide formed in the actuator I.

**24.** Articulated composite coupling according to the preceding claim, characterised in that the guide is a slot (34) and the follower element is a finger (33) carried by the diverter H.

**25.** Articulated composite coupling according to the preceding claim, characterised in that the path of the guide is one of the substantially symmetrical half-portions (15, 16) of the profile (5) of the cam (13).

**26.** Articulated composite coupling according to any one of the preceding claims, characterised in that the oblique connecting rod F is a telescoping rod the lengthwise clamping of which is controlled so as to actuate the angular-offset correcting coupling.

**Patentansprüche**

**1.** Gelenkverbindung zur Lenkwinkelkorrektur zwischen zwei Straßenfahrzeugeinheiten, einer vorderen A und einer nachlaufenden B, die durch ein von einer Radachse getragenes Zwischenglied C getrennt sind, bei der die Einheiten A und B über eine einfache Gelenkverbindung mit zwei Zapfengelenken D und E gelenkig verbunden sind, die die Einheiten A und B über das Zwischenglied C miteinander verbinden, wobei die vordere Einheit A und das Zwischenglied C bei Kurvenfahrt einen Winkel β und das Zwischenglied C und die nachlaufende Einheit B bei Kurvenfahrt einen Winkel α bilden, dadurch gekennzeichnet, daß die einfache Gelenkverbindung durch eine Verbindung zur Lenkwinkelkorrektur ergänzt ist, deren Korrekturverlauf einen wenig empfindlichen Bereich (38) im Zentrum zu beiden Seiten der Geradeausstellung aufweist, um die Ausrichtung der vorderen Einheit A von der der nachlaufenden Einheit B aus zu steuern.

**2.** Gelenkverbindung nach Anspruch 1, dadurch gekennzeichnet, daß der Korrekturverlauf einen Winkel β als Funktion des Winkels α vorgibt.

**3.** Gelenkverbindung nach Anspruch 1 oder 2, dadurch gekennzeichnet, daß sich die Verbindung zur Lenkwinkelkorrektur auf dem Zwischenglied C abstützt.

**4.** Gelenkkettenverbindung nach einem der Ansprüche 1 bis 3, dadurch gekennzeichnet, daß der wenig empfindliche Bereich (38) im Zentrum ein Bereich mit der Steigung 0 ist.

**5.** Gelenkverbindung nach einem der vorangehenden Ansprüche, dadurch gekennzeichnet, daß der wenig empfindliche Bereich (38) im Zentrum nach außen durch Übergangsbereiche (39, 40) abgegrenzt ist.

**6.** Gelenkverbindung nach einem der vorangehenden Ansprüche, dadurch gekennzeichnet, daß die Verbindung zur Lenkwinkelkorrektur von einem Schräglenker F und einer an einer der Straßentransporteinheiten angebrachten und von einem an der anderen Einheit angebrachten Wirkglied I gesteuerten Lenkumsetzer H gebildet ist.

**7.** Gelenkverbindung nach Anspruch 6, dadurch gekennzeichnet, daß das Wirkglied I mit der nachlaufenden Einheit B fest verbunden ist.

**8.** Gelenkverbindung nach Anspruch 6 oder 7, dadurch gekennzeichnet, daß der Lenkumsetzer H eine Wippeneinheit ist, die an einer Achse L schwenkbar ist, die mit einem Steuerglied des Wirkglieds I zusammenwirkt.

9. Gelenkverbindung nach dem vorangehenden Anspruch, dadurch gekennzeichnet, daß die Schwenkachse L auf dem Zwischenglied C angeordnet ist und die Verbindungsgerade der Gelenkzapfen D und E schneidet.

10. Gelenkverbindung nach Anspruch 8, dadurch gekennzeichnet, daß das Übertragungsmittel des Lenkumsetzers H ein steuernder Schräglenker F ist, der an der Einheit A und der Wippeneinheit (7) des Lenkumsetzers H gelagert ist.

11. Gelenkverbindung nach Anspruch 8, dadurch gekennzeichnet, daß das Wirkglied I ein Kurvenstück (13) und das Steuerglied das Profil (5) des Kurvenstücks (13) ist.

12. Gelenkverbindung nach Anspruch 8, dadurch gekennzeichnet, daß die Wippeneinheit (7) dreieckförmig ist.

13. Gelenkverbindung nach dem vorangehenden Anspruch, dadurch gekennzeichnet, daß die dreieckförmige Wippeneinheit (7) ein dreieckiges Schwenkteil (1) ist.

14. Gelenkverbindung nach dem vorangehenden Anspruch, dadurch gekennzeichnet, daß ein Bereich des dreieckigen Schwenkteils (1) entlang dem Profil (5) des Kurvenstücks (13) mit Rollmitteln (2, 3) verlagerbar ist.

15. Gelenkverbindung nach dem vorangehenden Anspruch, dadurch gekennzeichnet, daß die Rollmittel (2, 3) an den Ecken der Grundseite des Schwenkteils angeordnet sind und dessen Scheitel der Gelenkpunkt K mit einem Ende des Schräglenkers F ist.

16. Gelenkverbindung nach Anspruch 11, dadurch gekennzeichnet, daß das Profil (5) des Kurvenstücks (13) zwei etwa symmetrische Hälften (15, 16) aufweist, die durch eine im wesentlichen V-förmigen zentralen Senke (18) getrennt sind und jeweils an die zentrale Senke nach außen anschließend eine ansteigende Schräge (19, 20) und einen kreisförmig gerundeten Abschnitt (21, 22) aufweisen.

17. Gelenkverbindung nach dem vorangehenden Anspruch, dadurch gekennzeichnet, daß der kreisförmig gerundete Abschnitt (21, 22) den gleichen Mittelpunkt wie das benachbarte Zapfengelenk E aufweist.

18. Gelenkverbindung nach einem der Ansprüche 14 bis 17, dadurch gekennzeichnet, daß bei einem Gliederzug aus aneinandergereihten Einheiten die Profile (5) der Kurvenstücke (13) von einer zur anderen Gelenkverbindung variieren.

19. Gelenkverbindung nach einem der vorangehenden Ansprüche 6 bis 18, dadurch gekennzeichnet, daß das auf einer der Einheiten in J gelagerte Ende des Schräglenkers F auf dem an dieser Einheit befestigten Teil des Zapfengelenks D oder E gelagert ist.

20. Gelenkverbindung nach einem der vorangehenden Ansprüche, dadurch gekennzeichnet, daß der Lenkumsetzer H von einem an der Schwenkachse L gelenkten Wipplenker (8) und einem mit diesem verbundenen, ebenfalls an der Achse L gelenkten Schlepplenker (10) gebildet ist.

21. Gelenkverbindung nach dem vorangehenden Anspruch, dadurch gekennzeichnet, daß das eine Ende des Wipplenkers (8) mit einem Rollmittel (9) ausgestattet ist, während das andere Ende mit dem gelagerten Ende K des übertragenden Schräglenkers F verbunden ist, und daß das freie Ende des Schlepplenkers (10) mit einem Rollmittel (11) ausgestattet ist, wobei die Rollmittel (9, 11) in M und N mit dem Außenrand des Profils (5) des Steuergliedes im Stützkontakt stehen.

22. Gelenkverbindung nach Anspruch 20 oder 21, dadurch gekennzeichnet, daß der Wipplenker (8) und der Schlepplenker (10) von einer Feder (12) elastisch zusammengehalten sind.

23. Gelenkverbindung nach den Ansprüchen 1 bis 10, dadurch gekennzeichnet, daß der Lenkumsetzer H eine schwenkbare Schwenkplatte (31) ist, die ein Nachführelement entlang einer entsprechenden Führung am Wirkglied I aufweist.

24. Gelenkverbindung nach dem vorangehenden Anspruch, dadurch gekennzeichnet, daß die Führung ein Langloch (34) und das Nachführelement ein an dem Lenkumsetzer H angebrachter Finger (33) ist.

25. Gelenkverbindung nach dem vorangehenden Anspruch, dadurch gekennzeichnet, daß die Führungsbahn von der einen der etwa symmetrischen Hälften (15, 16) des Profils (5) des Kurvenstücks (13) gebildet ist.

26. Gelenkverbindung nach einem der vorangehenden Ansprüche, dadurch gekennzeichnet, daß der Schräglenker F eine Teleskopstange ist, deren Längsblockierung gesteuert ist, um die Verbindung zur Lenkwinkelkorrektur zu aktivieren.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15